# EUROPÄISCHE PATENTSCHRIFT

(11) **EP 2 509 772 B1**
(45) Veröffentlichungstag und Bekanntmachung des Hinweises auf die Patenterteilung: **28.06.2017**
(21) Anmeldenummer: 10784813.7
(22) Anmeldetag: 03.12.2010
(51) Int. Cl.: B29C 65/56, F16B 15/00, B29C 65/50, B64C 1/00, B29K 105/06, B29K 105/22, B29K 705/00

(54) **VERFAHREN ZUM ANBINDEN EINES FASERVERBUNDBAUTEILS AN EIN STRUKTURBAUTEIL EINES LUFT- UND RAUMFAHRZEUGES UND EINE ENTSPRECHENDE ANORDNUNG**
METHOD FOR CONNECTING A FIBER COMPOSITE COMPONENT TO A STRUCTURAL COMPONENT OF AN AIR AND SPACECRAFT, AND CORRESPONDING ARRANGEMENT
PROCÉDÉ POUR RATTACHER UN ÉLÉMENT COMPOSITE RENFORCÉ PAR DES FIBRES À UN ÉLÉMENT DE STRUCTURE D'UN AÉRONEF ET D'UN VÉHICULE SPATIAL ET ARRANGEMENT CORRESPONDANT

(30) Priorität: 08.12.2009 DE 102009047671; 08.12.2009 US 267643 P
(43) Veröffentlichungstag der Anmeldung: 17.10.2012
(73) Patentinhaber: Airbus Operations GmbH, 21129 Hamburg (DE)
(72) Erfinder: PACCHIONE, Marco, 22605 Hamburg (DE); FURFARI, Domenico, 22589 Hamburg (DE)
(74) Vertreter: Isarpatent
(86) Internationale Anmeldenummer: PCT/EP2010/068802
(87) Internationale Veröffentlichungsnummer: WO 2011/069899

(56) Entgegenhaltungen:
- EP-A2- 0 158 528
- WO-A1-96/40487
- WO-A1-99/22170
- WO-A1-2010/122325
- DE-A1- 4 441 681
- GB-A- 481 327
- GB-A- 2 132 134
- US-A- 2 423 922
- US-A1- 2008 003 401
- US-A1- 2009 087 259

## Beschreibung

Die vorliegende Erfindung bezieht sich auf ein Verfahren zum Anbinden eines Faserverbundbauteils an ein Strukturbauteil eines Luft- und Raumfahrzeuges und eine entsprechende Anordnung.

Obwohl auf beliebige Faserverbundbauteile anwendbar, werden die vorliegende Erfindung sowie die ihr zugrunde liegende Problematik nachfolgend mit Bezug auf Kohlefaserkunststoff (CFK)-Bauteile (auch als Faserverbundbauteile bezeichnet), beispielsweise Strukturbauteile eines Flugzeugs, näher erläutert.

Es ist allgemein bekannt, CFK-Hautschalen mit CFK-Stringern, CFK-Spanten, metallischen Spanten und ähnlichen Strukturbauteilen zu versteifen, um den hohen Belastungen im Flugzeugbereich bei möglichst geringem zusätzlichen Gewicht standzuhalten. Die Verwendung von Faserverbundbauteilen ist im Flugzeugbau zum Beispiel für Hautfelder und deren Versteifungen durch Stringer weit verbreitet. Sie werden zum Beispiel durch Prepregtechnologie, Thermosetverfahren und/oder Vakuuminfusionsverfahren zum Einbringen einer Matrix, beispielsweise eines Epoxidharzes, in Faserhalbzeuge und nachfolgendem Härten hergestellt.

Ein Faserverbundbauteil ist zum Beispiel aus Faserhalbzeugen aufgebaut. Unter Faserhalbzeugen sind Gewebe, Gelege und Fasermatten zu verstehen.

Strukturelle Füge- bzw. Verbindungsstellen, welche eine bestimmte Schadenstoleranz aufweisen, sind mit Metallfolien zwischen Stoßflächen versehen, wobei eine Querverstärkung (durch Dicke) hinzugefügt wird.

Verbundlaminate sind anfällig für Schäden, die in einer Ebene entstehen, wie zum Beispiel Delamination. Es wurden verschiedene Verbundtechnologien entwickelt, um die Eigenschaften in Querrichtung zu verbessern, wie beispielsweise Z-Pinning, Heften, Tuften.

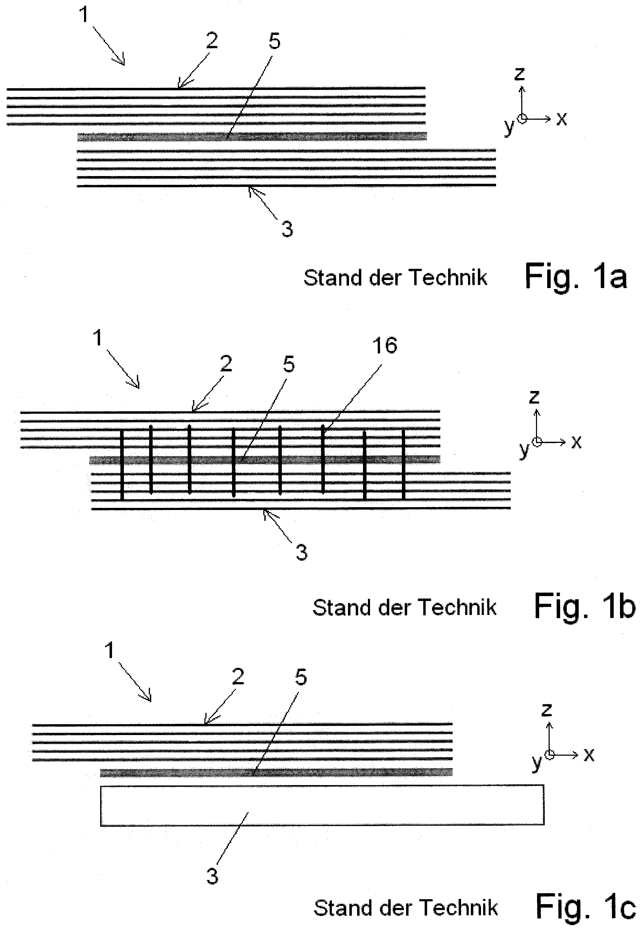

Fig. 1a-c zeigen schematische Schnittdarstellungen zur Erläuterung von Verfahren zum Anbinden eines Faserverbundbauteils 2 an ein Strukturbauteil 3 nach dem Stand der Technik. In Fig. 1a wird ein Verbindungsabschnitt 1 zwischen dem Faserverbundbauteil 2 und dem Strukturbauteil 3 durch Einfügen einer ersten Klebeschicht 5, z.B. eine Klebefolie, Thermoplast oder Duroplast, verbunden. In z-Richtung können Querverstärkungen eingesetzt sein. Hierzu gibt Fig. 1b so genannte Z-Pins 16 als Beispiel an. Die Z-Pins können z.B. aus Metall oder Verbundwerkstoff sein. In Fig. 1c kann diese Anordnung eine HybridKombination aus CFK-Bauteil 2 und Strukturbauteil 3 aus Metall sein, wobei die erste Klebeschicht wie oben beschrieben ausgebildet ist. Eine x-Richtung verläuft in Längsrichtung der Fasern, wobei die z-Richtung senkrecht dazu steht. Eine γ-Richtung erstreckt sich senkrecht zur Zeichnungsebene und in der Breite der Bauteile.

Es gibt auch Beispiele von Hybridteilen (CFK/Metall), welche mechanische Verbindungen zwischen den metallischen Teilen und Verbundwerkstoffteilen durch Verwendung von integrierten bzw. eingebetteten Merkmalen benutzen, um zusätzliche Stärke und Schadenstoleranz aufgrund einer metallischen Festsetzung des metallischen Teils in der Laminatstruktur zu erreichen.

TWI (The Welding Institute) gibt ein Verfahren an, das es dem Hersteller ermöglicht, ein Array von kleinen Anordnungen in das Laminat eindringen zu lassen, wodurch eine gemeinsam gehärtete (co-cured) mechanische Verbindung entsteht. Zur Bildung dieser Anordnungen wird jedoch Material selektiv aus der Oberfläche benutzt, wobei die Oberfläche dadurch beeinträchtigt werden kann. Das Profil der Anordnungen ist nicht leicht zu steuern, und die Oberfläche ist relativ rau, was eine Dauerstandfestigkeit des ursprünglichen Teils beeinträchtigen kann.

Bei dem so genannten Additive Layer Manufacturing kann die Geometrie dieser Anordnungen besser beherrscht werden.

Weiterhin gibt es eine reproduzierbare Verbindungsanordnung von metallischen, speziell perforierten Folien, die im Automobilbereich eingesetzt wird.

Ein weiteres Beispiel zur Illustration gibt das Dokument EP 1 801 427 A1, welches eine lokale metallische Verstärkung von Hochlastverbindungen von Verbundbauteilen beschreibt.

Des Weiteren beschreibt die WO 96/40487 A1 einen mit Stacheln versehenen Suszeptor zum Herstellen von thermoplastischen Schweißungen zwischen zumindest zweien vorgefertigten, faserverstärkten Harz-Verbunden. Der Suszeptor beschreibt im Bereich der Schweißzone eine in einer X-Y-Ebene liegende flächige Gestalt und besitzt die Fähigkeit, über von einem zeitlich variierenden Magnetfeld durch Induktion angeregte Wirbelströme Wärme in die Schweißzone einzubringen.

Vor diesem Hintergrund liegt der vorliegenden Erfindung die Aufgabe zugrunde, ein verbessertes Verfahren zum Anbinden eines Faserverbundbauteils an ein Strukturbauteil anzugeben. Eine weitere Aufgabe besteht darin, eine entsprechende Anordnung bereitzustellen.

Erfindungsgemäß wird diese Aufgabe durch ein Verfahren mit den Merkmalen der Patentansprüche 1 und 9 bzw. durch eine Anordnung mit den Merkmalen des Patentanspruchs 10 gelöst.

Demgemäß wird bei einem Verfahren zum Anbinden eines Faserverbundbauteils an ein Strukturbauteil eines Luft- und Raumfahrzeuges eine Metallfolie als Querverstärkungselement zwischen dem Faserverbundbauteil und dem Strukturbauteil vorgesehen. Die Metallfolie wird mit mindestens einem Verankerungsabschnitt ausgebildet, welcher von der dem Faserverbundbauteil zugewandten Oberfläche vorsteht. Dann wird die Metallfolie zwischen das Faserverbundbauteil und dem Strukturbauteil eingefügt.

In einem alternativen Verfahren ist vorgesehen, dass die bereitgestellte Metallfolie als Querverstärkungselement in einem Verbindungsabschnitt des Faserverbundbauteils und des Strukturbauteils vorgesehen ist. Sie wird mit mindestens einem Verankerungsabschnitt ausgebildet, welcher von einer Oberfläche der Metallfolie vorsteht. Dann wird die Metallfolie auf einer Außenseite des Verbindungsabschnitts angeordnet, wobei sich der mindestens eine Verankerungsabschnitt durch das Faserverbundbauteil vollständig hindurch erstreckt und sich in das Strukturbauteil hinein erstreckt oder durch das Strukturbauteil vollständig hindurch erstreckt und sich in das Faserverbundbauteil hinein erstreckt.

Eine erfindungsgemäße Anordnung umfasst ein Faserverbundbauteil und ein Strukturbauteil eines Luft- und Raumfahrzeuges, bei welcher eine Metallfolie in einem Verbindungsabschnitt des Faserverbundbauteils und des Strukturbauteils als Querverstärkungselement eingefügt ist. Die Metallfolie weist mindestens einen Verankerungsabschnitt auf, welcher von einer Oberfläche der Metallfolie vorsteht.

Somit weist die vorliegende Erfindung gegenüber den eingangs genannten Ansätzen den Vorteil auf, dass eine Schadenstoleranz einer Verbindung eines Faserverbundbauteils mit einem Strukturbauteil erhöht ist, indem eine Delamination in der Ebene des Faserverbundbauteils vermieden oder in ihrer Ausbreitung begrenzt wird.

Derartige Delaminationen können bei verbundenen Verbundbauteilen/Hybridverbindungen als Folge zufälliger Schäden, wie beispielsweise Herstellungsfehler, ungeeignete Oberflächenvorbereitung, Aufprall mit geringer Energie, hohe Schälkräfte, auftreten.

Weiterhin besteht ein bedeutender Vorteil darin, dass die Metallfolie ein kostengünstiges Bauteil mit geringem Eigengewicht ist.

Außerdem schränkt die Verwendung dieser Metallfolien die Anzahl von Befestigungselementen ein, welche für eine Schadenstoleranzvorschrift erforderlich sind (z.B. "Chicken Fasteners").

Ein noch weiterer Vorteil ergibt sich dadurch, dass eine verbesserte elektrische Leitfähigkeit dazu dient, Befestigungselemente zu reduzieren, welche für einen Blitzschutz eingesetzt werden.

In den Unteransprüchen finden sich vorteilhafte Ausgestaltungen und Verbesserungen der vorliegenden Erfindung.

Eine Grundidee der Erfindung besteht darin, eine Metallfolie mit zumindest einem Verankerungsabschnitt in einem Verbindungsabschnitt der Bauteile einer Anbindung eines Faserverbundbauteils an einem Strukturbauteil zu verankern.

CFK-Strukturen weisen gut bekannte Begrenzungen hinsichtlich ihrer Eigenschaften in Schadenstoleranz auf. Die Einfügung einer Metallfolie mit Verankerungsabschnitten, welche dazu geeignet sind, die Verbundlaminate zwischen Stoßflächen von Verbund- (oder Hybrid-) Verbindungen zu verankern, schaffen eine Querverstärkung (durch Dicke), wobei die Schadenstoleranzeigenschaften der Verbindung verbessert werden.

Die Erfindung ist vielseitig anwendbar. Zum Beispiel kann sie in den folgenden Kombinationen von Faserverbundbauteil und Strukturbauteil zum Einsatz kommen:
- Hybridkombination aus CFK und Metall
- Thermisch härtbarer Verbundwerkstoff (nass) und Metall
- Verbindung von nassem (ungehärtet oder teilgehärtet) thermisch härtbarem Laminat mit thermisch gehärtetem Laminat
- Sekundärverbindungen von thermisch härtbaren Laminaten
- Thermoplastisches Verschweißen von Verbundlaminaten

In dem Fall, wenn das Faserverbundbauteil ungehärtet oder teilgehärtet ist, wird die Metallfolie mit dem Faserverbundbauteil durch Aushärten desselben verbunden, wobei sich der mindestens eine Verankerungsabschnitt in das Faserverbundbauteil hinein erstreckt.

Ist das Faserverbundbauteil gehärtet, kann die Metallfolie mit dem Faserverbundbauteil durch eine erste Klebeschicht mit derselben verbunden werden, wobei sich der mindestens eine Verankerungsabschnitt in die erste Klebeschicht hinein erstreckt.

In einem weiteren Fall, wenn das Strukturbauteil ein metallisches Teil ist oder eine gehärtete Faserverbundstruktur aufweist, kann die Metallfolie mit dem Strukturbauteil über eine zweite Klebeschicht verbunden werden.

Eine weitere Ausführung sieht vor, dass die Metallfolie mit einem weiteren Verankerungsabschnitt, welcher von der dem Strukturbauteil zugewandten Oberfläche vorsteht und sich in die zweite Klebeschicht hinein erstreckt, an dem Strukturbauteil angebunden wird.

Die Verankerungsabschnitte, welche aus der Ebene der Metallfolie hervorstehen, dringen in das Faserverbundbauteil ein, wenn es ungehärtet oder teilgehärtet ist, oder dringen in die Klebeschicht ein. Hierbei bilden sie eine Verstärkung in z-Richtung, d.h. in einer Richtung, die aus der Ebene der Metallfolie hervorsteht, z.B. senkrecht oder in einem vorbestimmten Winkel. Dadurch kann eine Delamination in der Ebene eines Faserverbundbauteils vermieden oder angehalten werden.

Wenn das Strukturbauteil eine ungehärtete oder teilgehärtete Faserverbundstruktur aufweist, wird die Metallfolie mit einem weiteren Verankerungsabschnitt ausgebildet, welcher von der dem Strukturbauteil zugewandten Oberfläche vorsteht, d.h. die Metallfolie weist dann auf jeder Seite vorstehende Verankerungsabschnitte auf. Dann wird der weitere Verankerungsabschnitt mit dem Strukturbauteil durch Aushärten desselben verbunden, wobei sich der weitere Verankerungsabschnitt in das Strukturbauteil hinein erstreckt.

Es ist dabei auch möglich, dass die Metallfolie zunächst nur mit einem Verankerungsabschnitt mit dem Strukturbauteil durch Härten verbunden wird und danach an dem Faserverbundbauteil durch weiteres Härten angebunden wird. Natürlich ist auch ein gemeinsames Härten durchführbar.

In einem weiteren Fall, wenn das Faserverbundbauteil und das Strukturbauteil jeweils aus einem thermoplastischen Laminat bestehen, wird die Metallfolie mit mindestens einem weiteren Verankerungsabschnitt ausgebildet, welcher von der dem Strukturbauteil zugewandten Oberfläche vorsteht, so dass auf jeder Seite der Metallfolie ein Verankerungsabschnitt hervorsteht. Das Faserverbundbauteil kann nun nach Einfügen der Metallfolie mit dem Strukturbauteil verschweißt werden. Dabei erstrecken sich die Verankerungsabschnitte in das jeweils zugehörige Bauteil.

Hierbei kann es vorteilhaft sein, wenn bei dem Schweißvorgang die Metallfolie zur Einführung von Wärme, beispielsweise durch Induktion, zumindest teilweise verwendet wird.

Das Ausbilden der Metallfolie mit den Verankerungsabschnitten kann zum Beispiel durch Stanzbiegeverfahren, Hochgeschwindigkeits-Metallzerspanen, Elektronenstrahlbearbeiten, Additiv-Schichten-Herstellverfahren, und/oder dergleichen durchgeführt werden. Dadurch ergibt sich der Vorteil einer schnellen und kostengünstigen Herstellung durch bekannte Verfahren. Die Gestalt der Verankerungsabschnitte kann unterschiedlich in Abhängigkeit von der verwendeten Technologie sein.

Erfindungsgemäß ist der mindestens eine Verankerungsabschnitt und/oder der weitere Verankerungsabschnitt als Stanzbiegeteil ausgebildet und weist Verankerungselemente auf, die im Wesentlichen senkrecht oder in einem vorbestimmten Winkel zur jeweiligen Oberfläche der Metallfolie angeordnet sind. Dabei sind die Verankerungsabschnitte einstückig mit der Metallfolie ausgebildet

Alternativ weist der mindestens eine Verankerungsabschnitt und/oder der weitere Verankerungsabschnitt Verankerungspins auf, welche separat hergestellt und dann an der Metallfolie angeschweißt werden. Die Verankerungspins können auch durch Elektronenstrahlbearbeitung, Additiv-Schichten-Herstellverfahren (auch als Additiv-Layer-Manufacturing bezeichnet), und/oder dergleichen hergestellt werden.

Die Verankerungselemente und/oder Verankerungspins können zum Beispiel auch mit Widerhaken, Verzahnungen, Spitzen und/oder dergleichen versehen sein.

Die Metallfolie kann zum Beispiel ein Titanmaterial oder einen Stahl- bzw. Edelstahlwerkstoff aufweisen. Der Metallfolienwerkstoff muss gegen die Werkstoffe der Anordnung und deren Hilfsstoffe beständig sein.

Die Metallfolie kann vor dem Einsatz in der Anordnung einer entsprechenden Oberflächenbehandlung bzw. - vorbereitung unterzogen werden, so dass eine optimale Haftung zwischen dem Metallfolienwerkstoff und den Werkstoffen der Bauteile der Anordnung, z.B. Matrix, Fasern, Kleber, gewährleistet ist.

Verbindungen, welche derzeit genietet werden, wie beispielsweise Längsverbindungen von Rumpfteilen, umlaufende Verbindungen, können durch Einsatz der Erfindung gebondet bzw. geklebt werden. Zusätzlich können hoch belastete Stellen (z.B. Stringerausläufe) von dieser lokalen Verstärkung profitieren.

Die Erfindung wird im Folgenden anhand von Ausführungsbeispielen unter Bezugnahme auf die beiliegenden Figuren der Zeichnung näher erläutert.

Von den Figuren zeigen:
- Fig. 1a-c: schematische Schnittdarstellungen zur Erläuterung von Verfahren zum Anbinden eines Faserverbundbauteils an ein Strukturbauteil nach dem Stand der Technik;
- Fig. 2-6: schematische Schnittdarstellungen erster bis fünfter Ausführungsbeispiele zur Erläuterung eines erfindungsgemäßen Verfahrens zum Anbinden eines Faserverbundbauteils an ein Strukturbauteil;
- Fig. 7a-d: schematische Schnittdarstellungen von Verfahrensschritten für das zweite Ausführungsbeispiel nach Fig. 3;
- Fig. 8-11c: schematische, perspektivische Darstellungen erster bis dritter Ausführungsbeispiele von Verankerungsabschnitten; und
- Fig. 12: schematische, perspektivische Darstellungen von Verankerungselementen und -pins.

In den Figuren bezeichnen dieselben Bezugszeichen gleiche oder funktionsgleiche Komponenten, soweit nichts Gegenteiliges angegeben ist. Koordinaten x, y, z erleichtern eine Orientierung

Fig. 1a-c sind bereits in der Beschreibungseinleitung erläutert worden.

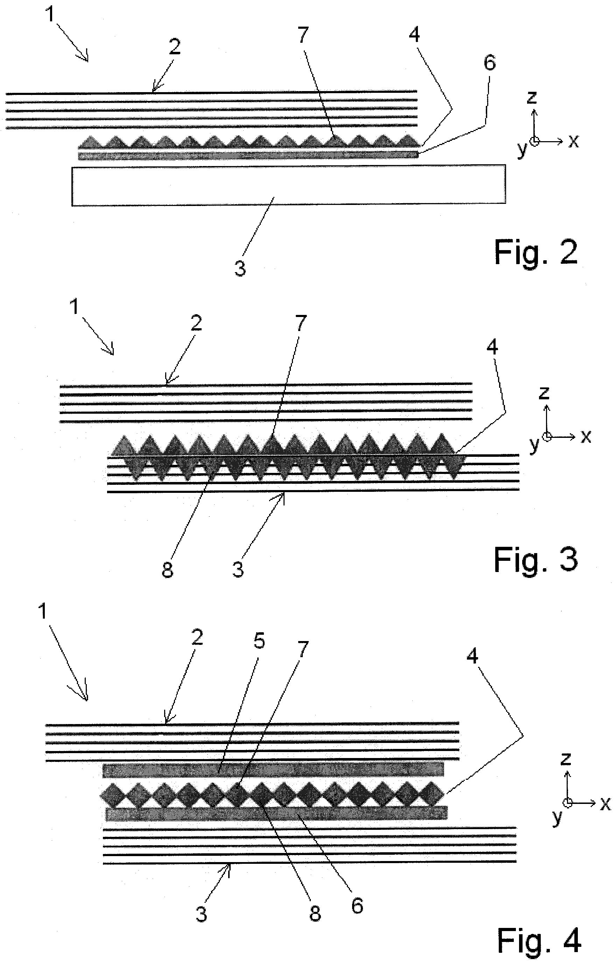

Fig. 2 zeigt eine schematische Schnittdarstellung eines ersten Ausführungsbeispiels zur Erläuterung eines erfindungsgemäßen Verfahrens zum Anbinden eines Faserverbundbauteils 2 an ein Strukturbauteil 3. Hierbei kann das Faserverbundbauteil ein Prepreg oder auch ein Fasergelege sein, das mit einer Matrix getränkt wird.

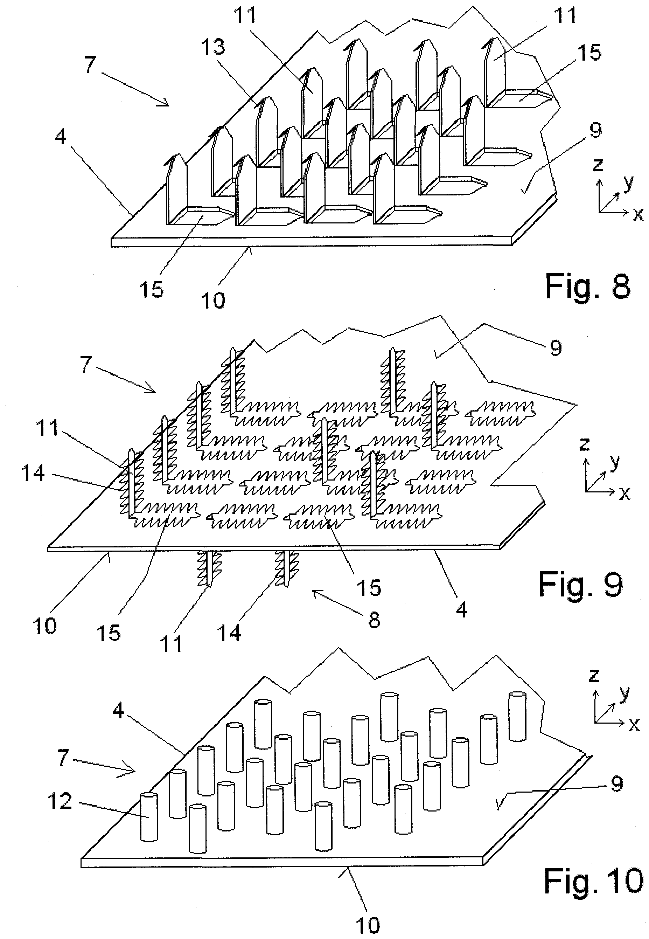

Eine Metallfolie 4 wird so ausgebildet, dass sie auf der Seite, die zu dem Faserverbundbauteil 2 weist, einen Verankerungsabschnitt 7 erhält. Dies kann zum Beispiel durch Stanzbiegeverfahren, Hochgeschwindigkeits-Metallzerspanen, Elektronenstrahlbearbeiten, Additiv-Schichten-Herstellverfahren, und/oder dergleichen durchgeführt werden. Eine weitere Beschreibung erfolgt weiter unten im Zusammenhang mit den Figuren 8 bis 12. Das Faserverbundbauteil 2 ist in diesem Beispiel ungehärtet (oder teilgehärtet), wobei das Strukturbauteil 3 ein Metallteil ist.

Die Metallfolie 4 wird über eine Klebeschicht 6 mit dem Strukturbauteil 3 verbunden. Auf der anderen Seite dringt der Verankerungsabschnitt 7 in z-Richtung in das Faserverbundbauteil 2 ein und wird mit diesem durch Härten des Faserverbundbauteils 2 verbunden. Auch eine gleichzeitige Durchführung von Verkleben und Härten kann ausgeführt werden.

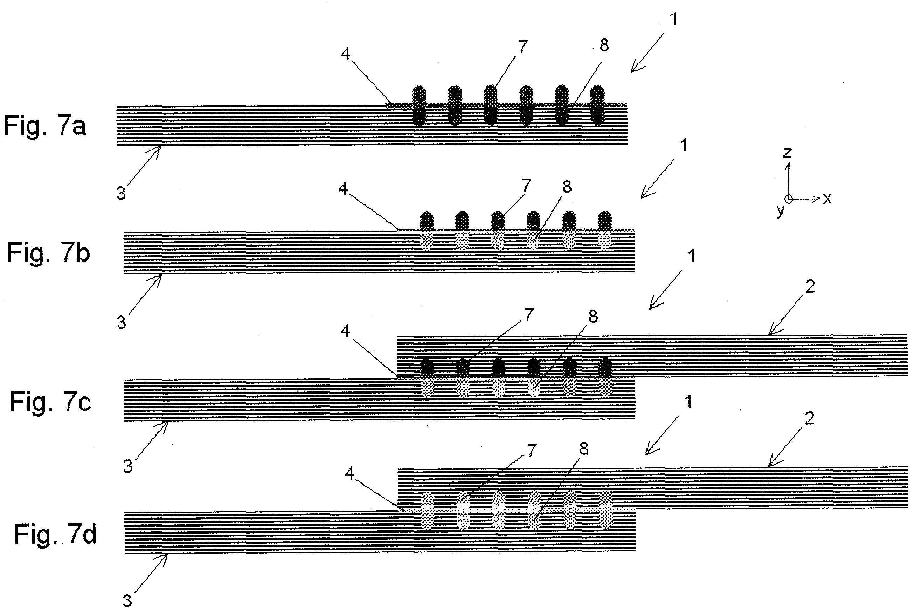

Ein zweites Ausführungsbeispiel illustriert Fig. 3 in einer schematischen Schnittdarstellung. Hier sind sowohl das Faserverbundbauteil 2 als auch das Strukturbauteil 3 Faserverbundwerkstoffe. Es gibt hier zwei Möglichkeiten. Zunächst kann die Metallfolie 4, welche so ausgebildet ist, dass sie auf beiden Seiten Verankerungsabschnitte 7 und 8 aufweist, die aus der Ebene der Metallfolie (hier x-y-Ebene) in z-Richtung senkrecht oder in einem vorbestimmten Winkel vorstehen, mit dem Strukturbauteil 3 verbunden werden. Dabei erstreckt sich der zweite Verankerungsabschnitt 8, der auf der Seite der Metallfolie 4 vorsteht, welche dem Strukturbauteil 3 zugewandt ist, in das Strukturbauteil 3 hinein und wird mit diesem durch Härten des Strukturbauteils 3 verbunden. Dann wird die Verbindung des ersten Verankerungsabschnitts 7 mit dem Faserverbundbauteil 2 in gleicher Weise durchgeführt. Dies wird in unten in Fig. 7a-d näher erläutert. Die zweite Möglichkeit besteht darin, beide Verankerungsabschnitte gleichzeitig durch gleichzeitiges Härten der Anordnung zu verbinden.

Sind in diesem Fall sowohl das Faserverbundbauteil 2 als auch das Strukturbauteil 3 bereits gehärtet, können sie gemäß der Darstellung eines dritten Ausführungsbeispiels, das Fig. 4 zeigt, mittels Klebeschichten 5 und 6 verbunden werden. Dazu wird die Metallfolie 4 mit zwei Verankerungsabschnitten 7 und 8 ausgebildet und wird zwischen die Bauteile 2 und 3 nach Aufbringung der Klebeschichten 5 und 6 auf die Stoßflächen, d.h. die sich gegenüberliegenden Seiten des Faserverbundbauteils 2 und des Strukturbauteils 3, eingefügt. Die Verankerungsabschnitte 7 und 8 erstrecken sich jeweils in die zugehörige Klebeschicht 5 und 6 und werden mit diesen unter Aushärten der Klebeschichten 5 und 6 verbunden. Die Klebeschicht 5 wird so auch mit dem Faserverbundbauteil 2 verbunden. Das gleiche erfolgt mit der Klebeschicht 6 und dem Strukturbauteil 3. Auf diese Weise ergibt sich eine Verbindung von Faserverbundbauteil 2 und Strukturbauteil 3.

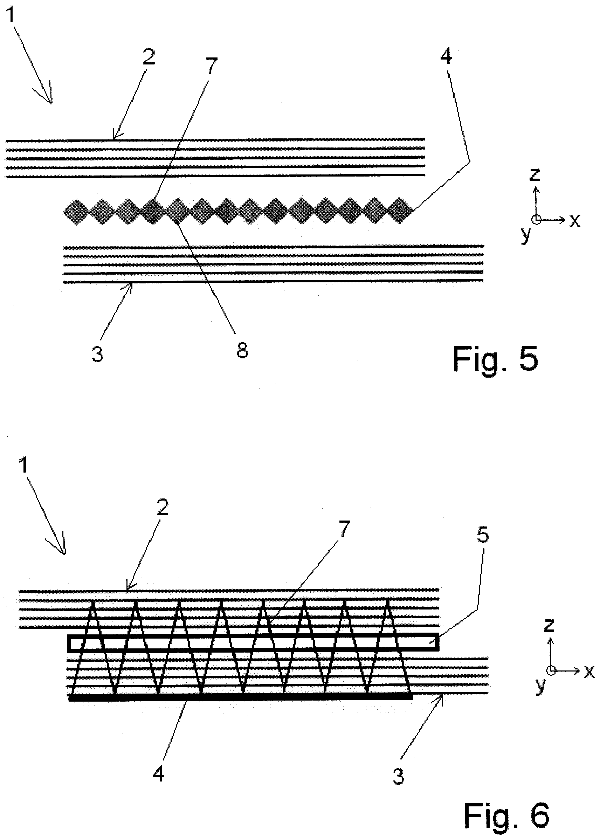

Ein viertes Ausführungsbeispiel illustriert Fig. 5, bei welchem das Faserverbundbauteil 2 und das Strukturbauteil 3 thermoplastische Verbundwerkstoffe aufweisen. Die Metallfolie 4 wird mit zwei Verankerungsabschnitten 7 und 8 ausgebildet. Dann wird sie zwischen das Faserverbundbauteil 2 und dem Strukturbauteil 3 eingefügt. Der erste Verankerungsabschnitt 7 erstreckt sich in z-Richtung in das Faserverbundbauteil 2, wobei sich der zweite Verankerungsabschnitt 8 ebenfalls in z-Richtung in das Strukturbauteil 3 erstreckt. Nun wird eine Verschweißung der thermoplastischen Bauteile durchgeführt, die in z-Richtung zusätzlich durch die Verankerungsabschnitte 7 und 8 in z-Richtung verstärkt werden.

Die Klebeschichten 5, 6 können z.B. als Klebefilm oder Klebepaste zum Einsatz kommen.

Weitere Ausführungen sind selbstverständlich möglich. Bei allen Ausführungen der Verbindung ist die gebondete bzw. geklebte oder geschweißte Verbindung permanent. Sie kann nur durch Zerstörung der Bondschichten (Klebeschicht oder geschweißte Schicht) und der Metallfolie 4 gelöst werden.

Eine weitere gemeinsame Eigenschaft der Ausführungen besteht darin, dass bei normalen Bedingungen bzw. bei normalem Betrieb die Lasten durch die Klebeschichten übertragen werden. Nur in dem Fall, in welchem ein lokaler Klebfehler und/oder Versagen auftritt, unterstützen die Metallfolien die Lastübertragung. Die Verankerungsabschnitte 7, 8 der Metallfolie 4 bilden eine Querverstärkung der Verbindung im Verbindungsabschnitt 1 quer zur x-Richtung bzw. in einem Winkel, z.B. senkrecht zur x-y-Ebene.

In Fig. 6 ist ein fünftes Ausführungsbeispiel illustriert, bei welchem die Metallfolie 4 mit einem Verankerungsabschnitt 7 ausgebildet ist und auf einer Außenseite des Verbindungsabschnitts 1 angeordnet ist. Hier ist es die Außenseite des Strukturbauteils 3, es kann aber auch die Außenseite des Faserverbundbauteils 2 sein. Bei dem fünften Ausführungsbeispiel weist das Strukturbauteil 2 einen ungehärteten oder teilgehärteten Faserverbundwerkstoff auf, und das Faserverbundbauteil 2 ist ebenfalls ungehärtet oder teilgehärtet. Der Verankerungsabschnitt 7 ist so ausgebildet, dass er das Strukturbauteil 3 in z-Richtung vollständig durchdring und sich in das Faserverbundbauteil 2 weiter erstreckt. Es kann auch eine Klebeschicht 5 vorgesehen sein. Durch gleichzeitiges Aushärten der Anordnung werden das Faserverbundbauteil 2 und das Strukturbauteil 3 wie oben beschrieben verbunden.

Fig. 7a-d zeigen schematische Schnittdarstellungen von Verfahrensschritten für das zweite Ausführungsbeispiel nach Fig. 3. Nachdem die Metallfolie 4 mit zwei Verankerungsabschnitten 7 und 8 ausgebildet worden ist, wird sie mit dem zweiten Verankerungsabschnitt 8 in dem Verbindungsabschnitt 1 in das ungehärtete oder teilgehärtete Strukturbauteil 3 eingebracht (Fig. 7a). Dann wird das Strukturbauteil 3 gehärtet und verbindet sich mit der Metallfolie 4 mit dem zweiten Verankerungsabschnitt 8 und der Metallfolie 4 selbst (Fig. 7b). In Fig. 7c wird das Faserverbundbauteil 2, z.B. bevorzugt als Prepreg, in dem Verbindungsabschnitt 1 auf den ersten Verankerungsabschnitt 7 der Metallfolie 4, die Metallfolie 4 und das Strukturbauteil 2 aufgebracht, wobei der erste Verankerungsabschnitt 7 sich in das Faserverbundbauteil 2 erstreckt. Schließlich erfolgt in Fig. 7d ein Aushärten des Faserverbundbauteil 2, wobei das Faserverbundbauteil 2 und das Strukturbauteil 3 über die Metallfolie 4 und deren Verankerungsabschnitte 7 und 8, die eine Querverstärkung des Verbindungsabschnitts 1 bilden, verbunden wird.

Fig. 8 zeigt eine schematische, perspektivische Darstellung eines ersten Ausführungsbeispiels eines Verankerungsabschnitts 7. Die Metallfolie 4 ist hier durch ein Stanzbiegeverfahren so bearbeitet, dass Verankerungselemente 11 in Form von oben zugespitzten Flächenelementen aus der Metallfolie 4 aus Ausstanzungen 15 herausgestanzt und um etwa 90° zur x-y-Ebene der Metallfolie 4 hochgebogen sind, wobei sie von einer ersten Oberfläche 9 der Metallfolie 4 vorstehen. Es können auch andere, vorbestimmte Winkel, entweder gleiche oder unterschiedliche, zur Anwendung kommen. An den freien Enden der Verankerungselemente 11 sind Widerhaken 13 angeordnet, die eine zusätzliche Verankerung bilden. Eine zweite Oberfläche 10 der Metallfolie 4 liegt in der Fig. 6 auf der Unterseite der Metallfolie 4.

Ein zweites Ausführungsbeispiel von Verankerungsabschnitten 7 und 8 ist in Fig. 9 schematisch perspektivisch dargestellt. Auf der ersten Oberfläche 9 der Metallfolie 4 sind Verankerungselemente 11 senkrecht von der ersten Oberfläche 9 vorstehend herausgestanzt und bilden den ersten Verankerungsabschnitt 7. Ein zweiter Verankerungsabschnitt 8 ist durch Biegen von ausgestanzten Verankerungselementen 11 nach unten gebildet, wobei der zweite Verankerungsabschnitt 8 von der zweiten Oberfläche 10 der Metallfolie 4 vorsteht. In diesem Beispiel sind die Verankerungselemente 11 an ihren Seiten mit Verzahnungen 14 versehen, wodurch den Verankerungselementen 11 eine größere Oberfläche zur Verbindung gegeben ist.

Durch die Ausstanzungen 15 kann Klebeschicht bzw. Matrixwerkstoff hindurch treten und somit eine innigere Verbindung von Faserverbundbauteil 2 und Strukturbauteil 3 schaffen.

Schließlich zeigt Fig. 10 ein drittes Ausführungsbeispiel eines Verankerungsabschnitts 7, der von der Oberfläche 9 der Metallfolie 4 vorsteht und aus Verankerungspins 12 besteht. Diese Verankerungspins 12 können zum Beispiel durch Additive Layer Manufacturing (Additiv- Schichten-Herstellverfahren) auf chemische und/oder elektrochemische Art und Weise gebildet werden.

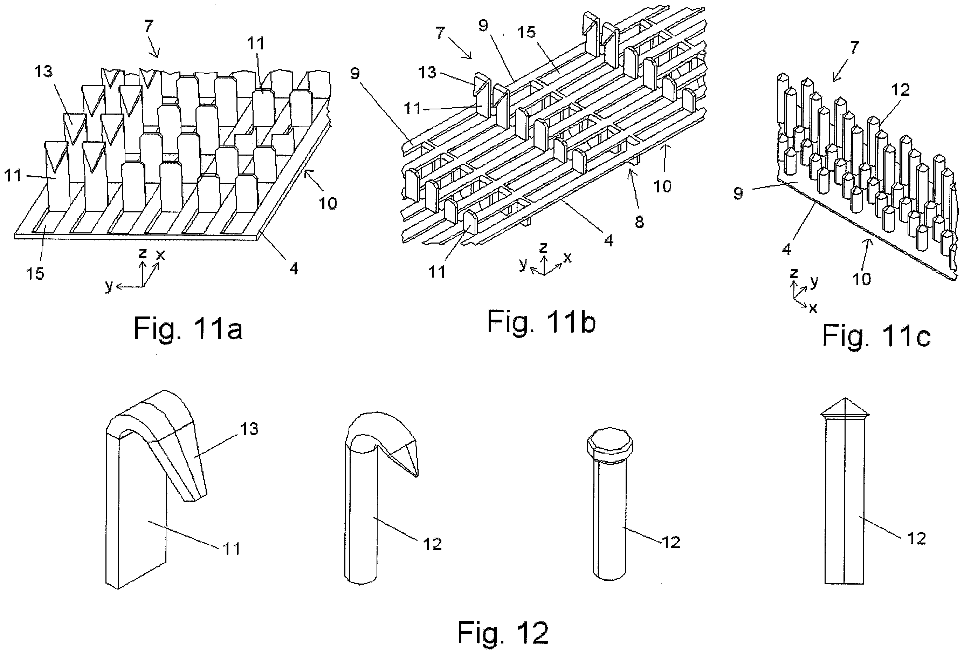

Die Anordnung der gezeigten Verankerungselemente 11 und Verankerungspins 12 ist nur beispielhaft und kann selbstverständlich variieren, wie in den Figuren 11 und 12 in Beispielen dargestellt wird.

Fig. 11a zeigt hier eine Kombination des ersten Ausführungsbeispiels eines ersten Verankerungsabschnitts 7 nach Fig. 8 mit und ohne Widerhaken 13 und unterschiedlicher Längen von Verankerungselementen 11. Eine gleichzeitige Ausbildung mit einem zweiten Verankerungsabschnitt 8 zeigt Fig. 11b. Fig. 11c zeigt unterschiedlich große Verankerungspins 12.

In Fig. 12 ist ein Verankerungselement 11 mit einem umgebogenen Widerhaken 13 gezeigt. Fig. 12 stellt weiterhin Verankerungspins 12 mit verschiedenen Kopfausführungen dar. Der linke Verankerungspin 12 weist einen angespitzten und umgebogenen Kopf auf, der rechts daneben gezeigte ist mit einer Art Nagelkopf versehen, wobei der rechts davon abgebildete Verankerungspin 12 eine Spitze mit überstehendem Rand aufweist.

Die Verankerungselemente 11 und Verankerungspins 12 sind zum Beispiel einstückig mit der Metallfolie 4 hergestellt. Es ist aber auch möglich, dass die Verankerungspins 12 (siehe Fig. 12) separat hergestellt und dann an bzw. auf die Metallfolie 4 geschweißt werden. Dabei kann die Metallfolie 4 auch schon Verankerungselemente 11 (und auch Ausstanzungen oder nur Ausstanzungen) durch Stanzbiegeverfahren aufweisen.

So kann bei dem vierten Ausführungsbeispiel gemäß Fig. 5 die Metallfolie 4 als zur Wärmeeinführung bzw. Unterstützung des Schweißvorgangs dienen, wie zum Beispiel durch Induktion.

Bei einem Verfahren zum Anbinden eines Faserverbundbauteils 2 an ein Strukturbauteil 3 eines Luft- und Raumfahrzeuges, wird eine Metallfolie 4 als Querverstärkungselement zwischen dem Faserverbundbauteil 2 und dem Strukturbauteil 3 vorgesehen. Sie wird mit mindestens einem Verankerungsabschnitt 7, welcher von der dem Faserverbundbauteil 2 zugewandten Oberfläche 9 vorsteht ausgebildet und zwischen das Faserverbundbauteil 2 und dem Strukturbauteil 3 eingefügt. Eine entsprechende Anordnung ist nach diesem Verfahren hergestellt.

### Bezugszeichenliste

- 1: Verbindungsabschnitt
- 2: Faserverbundbauteil
- 3: Strukturbauteil
- 4: Metallfolie
- 5: Erste Klebeschicht
- 6: Zweite Klebeschicht
- 7: Erster Verankerungsabschnitt
- 8: Zweiter Verankerungsabschnitt
- 9: Erste Oberfläche
- 10: Zweite Oberfläche
- 11: Verankerungselement
- 12: Verankerungspin
- 13: Widerhaken
- 14: Verzahnung
- 15: Ausstanzung
- 16: Z-Pin
- x, y, Z: Koordinaten

## Patentansprüche

1. Verfahren zum Anbinden eines Faserverbundbauteils (2) an ein Strukturbauteil (3) eines Luft- und Raumfahrzeuges, mit den Schritten:
Bereitstellen einer Metallfolie (4) als Querverstärkungselement zwischen dem Faserverbundbauteil (2) und dem Strukturbauteil (3);
Ausbilden der Metallfolie (4) mit mindestens einem Verankerungsabschnitt (7), welcher von der dem Faserverbundbauteil (2) zugewandten Oberfläche (9) vorsteht, wobei das Ausbilden der Metallfolie (4) mit mindestens einem Verankerungsabschnitt (7, 8) durch ein Stanzbiegeverfahren, bei welchem Verankerungselemente (11) im Wesentlichen senkrecht oder in einem vorbestimmten Winkel zur jeweiligen Oberfläche (9, 10) der Metallfolie (4) angeordnet werden, oder durch Anschweißen von separat hergestellten Verankerungspins (12) erfolgt; und
Einfügen der Metallfolie (4) zwischen das Faserverbundbauteil (2) und dem Strukturbauteil (3).

2. Verfahren nach Anspruch 1,
**dadurch gekennzeichnet,**
**dass** die Metallfolie (4) mit dem Faserverbundbauteil (2) durch Aushärten desselben verbunden wird, wenn das Faserverbundbauteil (2) ungehärtet oder teilgehärtet ist, wobei sich der mindestens eine Verankerungsabschnitt (7, 8) in das Faserverbundbauteil (2) hinein erstreckt.

3. Verfahren nach Anspruch 1,
**dadurch gekennzeichnet,**
**dass** die Metallfolie (4) mit dem Faserverbundbauteil (2) durch eine erste Klebeschicht (5) mit demselben verbunden wird, wenn das Faserverbundbauteil (2) gehärtet ist, wobei sich der mindestens eine Verankerungsabschnitt (7) in die erste Klebeschicht (5) hinein erstreckt.

4. Verfahren nach zumindest einem der vorhergehenden Ansprüche,
**dadurch gekennzeichnet,**
**dass** die Metallfolie (4) mit dem Strukturbauteil (3) über eine zweite Klebeschicht (6) verbunden wird, wenn das Strukturbauteil (3) ein metallisches Teil ist oder eine gehärtete Faserverbundstruktur aufweist.

5. Verfahren nach Anspruch 4,
**dadurch gekennzeichnet,**
**dass** die Metallfolie (4) mit einem weiteren Verankerungsabschnitt (8), welcher von der dem Strukturbauteil (2) zugewandten Oberfläche (10) vorsteht und sich in die zweite Klebeschicht (5) hinein erstreckt, an dem Strukturbauteil (3) angebunden wird.

6. Verfahren nach zumindest einem der Ansprüche 1 bis 3,
**dadurch gekennzeichnet,**
**dass** das Verfahren folgende zusätzliche Verfahrensschritte aufweist, falls das Strukturbauteil (3) eine ungehärtete oder teilgehärtete Faserverbundstruktur aufweist:
Ausbilden der Metallfolie (4) mit einem weiteren Verankerungsabschnitt (8), welcher von der dem Strukturbauteil (3) zugewandten Oberfläche (9) vorsteht; und
Verbinden des weiteren Verankerungsabschnitts (8) mit dem Strukturbauteil (3) durch Aushärten desselben, wobei sich der weitere Verankerungsabschnitt (8) in das Strukturbauteil (3) hinein erstreckt.

7. Verfahren nach Anspruch 1,
**dadurch gekennzeichnet,**
**dass** das Verfahren folgende zusätzlichen Verfahrensschritte aufweist, falls das Faserverbundbauteil (2) und das Strukturbauteil (3) jeweils aus einem thermoplastischen Laminat bestehen:
Ausbilden der Metallfolie (4) mit mindestens einem weiteren Verankerungsabschnitt (8), welcher von der dem Strukturbauteil (3) zugewandten Oberfläche (9) vorsteht; und
Verschweißen des Faserverbundbauteils (2) mit dem Strukturbauteil (3) nach Einfügen der Metallfolie (4), wobei sich die Verankerungsabschnitte (7, 8) in das jeweils zugehörige Bauteil (2, 3) erstrecken.

8. Verfahren nach Anspruch 7,
**dadurch gekennzeichnet,**
**dass** bei dem Schweißvorgang die Metallfolie (4) zum Einkoppeln von Wärme, beispielsweise durch Induktion, zumindest teilweise verwendet wird.

9. Verfahren zum Anbinden eines Faserverbundbauteils (2) an ein Strukturbauteil (3) eines Luft- und Raumfahrzeuges, mit den Schritten:
Bereitstellen einer Metallfolie (4) als Querverstärkungselement in einem Verbindungsabschnitt (1) des Faserverbundbauteils (2) und des Strukturbauteils (3) ;
Ausbilden der Metallfolie (4) mit mindestens einem Verankerungsabschnitt (7), welcher von einer Oberfläche (9) der Metallfolie (4) vorsteht, wobei das Ausbilden der Metallfolie (4) mit mindestens einem Verankerungsabschnitt (7, 8) durch ein Stanzbiegeverfahren, bei welchem Verankerungselemente (11) im Wesentlichen senkrecht oder in einem vorbestimmten Winkel zur jeweiligen Oberfläche (9, 10) der Metallfolie (4) angeordnet werden, oder durch Anschweißen von separat hergestellten Verankerungspins (12) erfolgt; und
Anordnen der Metallfolie (4) auf einer Außenseite des Verbindungsabschnitts (1), wobei sich der mindestens eine Verankerungsabschnitt (7) durch das Faserverbundbauteil (2) vollständig hindurch erstreckt und sich in das Strukturbauteil (3) hinein erstreckt oder durch das Strukturbauteil (3) vollständig hindurch erstreckt und sich in das Faserverbundbauteil (2) hinein erstreckt.

10. Anordnung mit einem Faserverbundbauteil (3) und einem Strukturbauteil (2) eines Luft- und Raumfahrzeuges,
bei welcher eine Metallfolie (4) in einem Verbindungsabschnitt (1) des Faserverbundbauteils (3) und des Strukturbauteils (2) als Querverstärkungselement eingefügt ist, wobei die Metallfolie (4) mindestens einen Verankerungsabschnitt (7) aufweist, welcher von einer Oberfläche (9) der Metallfolie (4) vorsteht,
**dadurch gekennzeichnet, dass**
der mindestens eine Verankerungsabschnitt (7) als Stanzbiegeteil ausgebildet ist und Verankerungselemente (11) aufweist, die im Wesentlichen senkrecht oder in einem vorbestimmten Winkel zur jeweiligen Oberfläche (9, 10) der Metallfolie (4) angeordnet sind oder dass der mindestens eine Verankerungsabschnitt (7) Verankerungspins (12) aufweist, welche separat hergestellt und angeschweißt sind.

11. Anordnung nach Anspruch 10,
**dadurch gekennzeichnet,**
**dass** die Metallfolie (4) einen weiteren Verankerungsabschnitt (8) aufweist, welcher von der dem Strukturbauteil (3) zugewandten Oberfläche (10) der Metallfolie (4) vorsteht.

12. Anordnung nach Anspruch 10 oder 11,
**dadurch gekennzeichnet,**
**dass** die Verankerungselemente (11) mit Widerhaken (13) und/oder Verzahnungen (14) versehen sind.

## Claims

1. Method for connecting a fibre composite component (2) to a structural component (3) of an aircraft and spacecraft, comprising the steps of:
providing a metal foil (4) as a transverse reinforcement element between the fibre composite component (2) and the structural component (3);
forming the metal foil (4) with at least one anchoring portion (7) which protrudes from the surface (9) facing the fibre composite component (2), wherein the metal foil (4) is formed with at least one anchoring portion (7, 8) by means of a punch-bending method, in which anchoring elements (11) are arranged substantially perpendicularly or at a predetermined angle with respect to the respective surface (9, 10) of the metal foil (4), or by welding separately produced anchoring pins (12); and
inserting the metal foil (4) between the fibre composite component (2) and the structural component (3).

2. Method as claimed in claim 1, **characterised in that** the metal foil (4) is connected to the fibre composite component (2) by curing of same, if the fibre composite component (2) is uncured or is partially cured, wherein the at least one anchoring portion (7, 8) extends into the fibre composite component (2).

3. Method as claimed in claim 1, **characterised in that** the metal foil (4) is connected to the fibre composite component (2) by means of a first adhesive layer (5) therewith, if the fibre composite component (2) is cured, wherein the at least one anchoring portion (7) extends into the first adhesive layer (5).

4. Method as claimed in any one of the preceding claims, **characterised in that** the metal foil (4) is connected to the structural component (3) by means of a second adhesive layer (6), if the structural component (3) is a metallic part or has a cured fibre composite structure.

5. Method as claimed in claim 4, **characterised in that** the metal foil (4) is connected to the structural component (3) by means of a further anchoring portion (8) which protrudes from the surface (10) facing the structural component (2) and extends into the second adhesive layer (5).

6. Method as claimed in at least one of claims 1 to 3, **characterised in that** the method comprises the following additional method steps, if the structural component (3) has an uncured or a partially cured fibre composite structure:
forming the metal foil (4) with a further anchoring portion (8) which protrudes from the surface (9) facing the structural component (3); and
connecting the further anchoring portion (8) to the structural component (3) by curing of same, wherein the further anchoring portion (8) extends into the structural component (3).

7. Method as claimed in claim 1, **characterised in that** the method comprises the following additional method steps, if the fibre composite component (2) and the structural component (3) each consist of a thermoplastic laminate:
forming the metal foil (4) with at least one further anchoring portion (8) which protrudes from the surface (9) facing the structural component (3); and
welding the fibre composite component (2) to the structural component (3) after insertion of the metal foil (4), wherein the anchoring portions (7, 8) extend into the respectively associated component (2, 3).

8. Method as claimed in claim 7, **characterised in that** during the welding procedure the metal foil (4) is used at least partially for the purpose of coupling-in heat, e.g. by induction.

9. Method for connecting a fibre composite component (2) to a structural component (3) of an aircraft and spacecraft, comprising the steps of:
providing a metal foil (4) as a transverse reinforcement element in a connection portion (1) of the fibre composite component (2) and the structural component (3);
forming the metal foil (4) with at least one anchoring portion (7) which protrudes from a surface (9) of the metal foil (4), wherein the metal foil (4) is formed with at least one anchoring portion (7, 8) by means of a punch-bending method, in which anchoring elements (11) are arranged substantially perpendicularly or at a predetermined angle with respect to the respective surface (9, 10) of the metal foil (4), or by welding separately produced anchoring pins (12); and
disposing the metal foil (4) on an outer side of the connection portion (1), wherein the at least one anchoring portion (7) extends completely through the fibre composite component (2) and extends into the structural component (3) or extends completely through the structural component (3) and extends into the fibre composite component (2).

10. Arrangement comprising a fibre composite component (3) and a structural component (2) of an aircraft and spacecraft, in which a metal foil (4) is inserted in a connection portion (1) of the fibre composite component (3) and structural component (2) as a transverse reinforcement element, wherein the metal foil (4) has at least one anchoring portion (7) which protrudes from a surface (9) of the metal foil (4), **characterised in that** the at least one anchoring portion (7) is formed as a punch-bent part and has anchoring elements (11) which are disposed substantially perpendicularly or at a predetermined angle with respect to the respective surface (9, 10) of the metal foil (4) or **in that** the at least one anchoring portion (7) has anchoring pins (12) which are separately produced and welded.

11. Arrangement as claimed in claim 10, **characterised in that** the metal foil (4) has a further anchoring portion (8) which protrudes from the surface (10) of the metal foil (4) facing the structural component (3).

12. Arrangement as claimed in claim 10 or 11, **characterised in that** the anchoring elements (11) are provided with barbs (13) and/or serrations (14).

## Revendications

1. Procédé destiné à relier un composant composite renforcé par fibres (2) à un composant structurel (3) d'un aéronef et véhicule spatial, comportant les étapes de :
fourniture d'une feuille métallique (4) en tant qu'élément de renforcement transversal entre le composant composite renforcé par fibres (2) et le composant structurel (3) ;
formation de la feuille métallique (4) avec au moins une section d'ancrage (7), laquelle fait saillie de la surface (9) tournée vers le composant composite renforcé par fibres (2), dans lequel procédé la formation de la feuille métallique (4) avec au moins une section d'ancrage (7, 8) est réalisée au moyen d'un procédé d'estampage-cintrage, dans lequel des éléments d'ancrage (11) sont disposés essentiellement verticalement ou dans un angle prédéterminé par rapport à la surface respective (9, 10) de la feuille métallique (4), ou par soudage de broches d'ancrage (12) fabriquées séparément ; et
insertion de la feuille métallique (4) entre le composant composite renforcé par fibres (2) et le composant structurel (3).

2. Procédé selon la revendication 1, **caractérisé en ce que** la feuille métallique (4) est reliée au composant composite renforcé par fibres (2) par durcissement de celui-ci lorsque le composant composite renforcé par fibres (2) est non durci ou partiellement durci, dans lequel procédé l'au moins une section d'ancrage (7, 8) s'étend en pénétrant dans le composant composite renforcé par fibres (2).

3. Procédé selon la revendication 1,
**caractérisé en ce**
**que** la feuille métallique (4) comprenant le composant composite renforcé par fibres (2) est reliée à celui-ci au moyen d'une première couche de colle (5) lorsque le composant composite renforcé par fibres (2) est durci, dans lequel procédé l'au moins une section d'ancrage (7) s'étend en pénétrant dans la première couche de colle (5).

4. Procédé selon au moins une des revendications précédentes,
**caractérisé en ce**
**que** la feuille métallique (4) comprenant le composant structurel (3) est reliée par l'intermédiaire d'une deuxième couche de colle (6) lorsque le composant structurel (3) est une pièce métallique ou présente une structure composite durcie, renforcée par fibres.

5. Procédé selon la revendication 4, **caractérisé en ce que** la feuille métallique (4) est reliée à une section d'ancrage supplémentaire (8), laquelle fait saillie de la surface (10) tournée vers le composant structurel (2) et s'étend en pénétrant dans la deuxième couche de colle (6).

6. Procédé selon au moins l'une des revendications 1 à 3, **caractérisé en ce**
**que** le procédé présente les étapes de procédé supplémentaires suivantes dans le cas où le composant structurel présente une structure composite renforcée par fibres, non durcie ou partiellement durcie :
formation de la feuille métallique (4) avec une section d'ancrage supplémentaire (8), laquelle fait saillie de la surface (9) tournée vers le composant structurel (3) ; et
liaison de la section d'ancrage supplémentaire (8) au composant structurel (3) par durcissement de celui-ci, dans lequel procédé la section d'ancrage supplémentaire (8) s'étend en pénétrant dans le composant structurel (3).

7. Procédé selon la revendication 1, **caractérisé en ce que** le procédé présente les étapes de procédé supplémentaires suivantes dans le cas où le composant composite renforcé par fibres (2) et le composant structurel (3) sont respectivement composés de stratifié thermoplastique :
formation de la feuille métallique (4) avec au moins une section d'ancrage supplémentaire (8), laquelle fait saillie de la surface (9) tournée vers le composant structurel (3) ; et
soudage du composant composite renforcé par fibres (2) au composant structurel (3) après l'insertion de la feuille métallique (4), dans lequel procédé les sections les sections d'ancrage (7, 8) s'étendent dans le composant (2, 3) respectivement correspondant.

8. Procédé selon la revendication 7, **caractérisé en ce que** lors de l'opération de soudage, la feuille métallique (4) est utilisée au moins en partie pour le couplage de chaleur, par exemple par induction.

9. Procédé destiné à relier un composant composite renforcé par fibres (2) à un composant structurel (3) d'un aéronef et véhicule spatial, comportant les étapes de :
fourniture d'une feuille métallique (4) en tant qu'élément de renforcement transversal dans une section de liaison (1) du composant composite renforcé par fibres (2) et du composant structurel (3) ;
formation de la feuille métallique (4) avec au moins une section d'ancrage (7), laquelle fait saillie d'une surface (9) de la feuille métallique (4), dans lequel procédé la formation de la feuille métallique (4) avec au moins une section d'ancrage (7, 8) est réalisée au moyen d'un procédé d'estampage-cintrage, dans lequel des éléments d'ancrage (11) sont disposés essentiellement verticalement ou dans un angle prédéterminé par rapport à la surface respective (9, 10) de la feuille métallique (4), ou par soudage de broches d'ancrage (12) fabriquées séparément ;
disposition de la feuille métallique (4) sur un côté extérieur de la section de liaison (1), dans lequel procédé l'au moins une section d'ancrage (7) s'étend en traversant complètement le composant composite renforcé par fibres (2) et s'étend en pénétrant dans le composant structurel (3) ou s'étend en traversant complètement le composant structurel (3) et s'étend en pénétrant dans le composant composite renforcé par fibres (2).

10. Agencement comprenant un composant composite renforcé par fibres (3) et un composant structurel (2) d'un aéronef et véhicule spatial,
dans lequel agencement une feuille métallique (4) est insérée dans une section de liaison (1) du composant composite renforcé par fibres (3) et du composant structurel (2) en tant qu'élément de renforcement transversal, dans lequel agencement la feuille métallique (4) présente au moins une section d'ancrage (7), laquelle fait saillie d'une surface (9) de la feuille métallique, **caractérisé en ce que**
l'au moins une section d'ancrage (7) est réalisée comme pièce estampée cintrée et présente des éléments d'ancrage (11) qui sont essentiellement disposés verticalement ou dans un angle prédéterminé par rapport à la surface respective (9, 10) de la feuille métallique (4) ou **en ce que** l'au moins une section d'ancrage (7) présente des broches d'ancrage (12), lesquelles sont fabriquées séparément et soudées.

11. Agencement selon la revendication 10, **caractérisé en ce que** la feuille métallique (4) présente une section d'ancrage supplémentaire (8), laquelle fait saillie de la surface (10) de la feuille métallique (4), tournée vers le composant structurel (3).

12. Agencement selon la revendication 10 ou 11, **caractérisé en ce que** les éléments d'ancrage (11) sont munis de barbillons (13) et/ou de dentures (14).
